# EUROPEAN PATENT SPECIFICATION

(11) **EP 1 785 343 B1**
(45) Date of publication and mention of the grant of the patent: **15.10.2008**
(21) Application number: 06123088.4
(22) Date of filing: 27.10.2006
(51) Int. Cl.: B62J 9/00, B62J 7/04

(54) **Storage box for a vehicle**
Aufbewahrungsbehälteranordnung für ein Fahrzeug
Coffret pour un véhicule

(30) Priority: 11.11.2005 IT MI20052155
(43) Date of publication of application: 16.05.2007
(73) Proprietor: PIAGGIO & C. S.p.A., 56025 Pontedera (Pisa) (IT)
(72) Inventor: Maffe', Francesco, 31044 Montebelluna (Treviso) (IT)
(74) Representative: Zanardo, Giovanni

(56) References cited:
- US-A- 3 625 405
- US-A- 4 266 703
- US-B1- 6 817 501

## Description

The present invention relates to an object- and/or helmet-holder compartment device for motor vehicles.

More specifically, the invention relates to an object- and/or helmet-holder compartment device commonly known as "top box", studied and produced in particular for reducing the instability of the vehicle generated by traditional top boxes.

As known, traditional top boxes are object-holder compartments, normally removable and rigid, suitable for containing helmets or other accessories, during journeys or stops.

Traditional top boxes are generally situated to the rear of the driver or, more specifically, of the passenger being transported.

The use of top boxes of the known type creates the risk, if the load is excessive, of instability of the vehicle due to the higher position of the top box with respect to the barycentre of the vehicle.

Furthermore, with an increased distance between the concentrated weight of the top box and the barycentre of the vehicle, there is a significant reduction in the speed aerodynamics and manageability in city traffic.

The rear position of the top box also creates the risk of contact with vehicles or other obstacles and a considerable increase in the encumbrance of the vehicle resulting in greater difficulty in the parking phase.

For example, a luggage box for motorcycles of the slidable type, having the features disclosed in the preamble of claim 1, is disclosed in document US 4 266 703.

In view of what is specified above, there is evidently the necessity of an object- and/or helmet-holder compartment of the top box type, such as that of the present invention, which allows an improvement in the aerodynamic coefficient with respect to that of vehicles equipped with compartments of the traditional type.

An objective of the present invention is therefore to solve the problems of the known art by providing an object- and/or helmet-holder compartment device of the top box type which effectively reduces the instability of vehicles.

Another objective of the present invention is to provide a top box which improves the aerodynamic coefficient with respect to that of vehicles equipped with top boxes of the traditional type.

Another objective of the present invention is to provide an object- and/or helmet-holder compartment device which is simple and economical to produce.

These and other objectives are achieved with the object- and/or helmet-holder compartment device of the top box type according to the present invention which has the characteristics of the enclosed claim 1.

Further characteristics of the device are object of the dependent claims.

The characteristics and advantages of an object- and/or helmet-holder compartment device of the top box type according to the present invention will appear more evident from the following illustrative and nonlimiting description, referring to the enclosed schematic drawings, in which:
- figure 1 is a side schematic sectional view of an object:- and/or helmet-holder compartment device of the top box type in a forward position ;
- figure 2 is a side schematic sectional view of an object- and/or helmet-holder compartment of the top box type in a rear position ;
- figure 3 is a side schematic sectional view of an object- and/or helmet-holder compartment device of the top box type in a forward position;
- figure 4 is a side schematic sectional view of an object- and/or helmet-holder compartment device of the top box type in a forward position;
- figure 5 is a side schematic sectional view of the object:- and/or helmet-holder compartment device of the top box type in a rear position according to the present invention;
- figure 6 is a side schematic view of the supporting plate in a rear position;
- figure 7 is a side schematic view of the supporting plate when being transferred to a forward position;
- figure 8 is a side schematic view of the supporting plate in a forward position.

With reference to the figures, these show an object- and/or helmet-holder compartment device of the top box type, indicated as a whcle with 10.

The compartment device 10 comprises at least one top box 1, at least one guiding element 2, which can be fixed to the vehicle, at least one fixing element 3, fixed to the top box 1 and moving means 5 constrained to the guiding element 2 and fixing means 3.

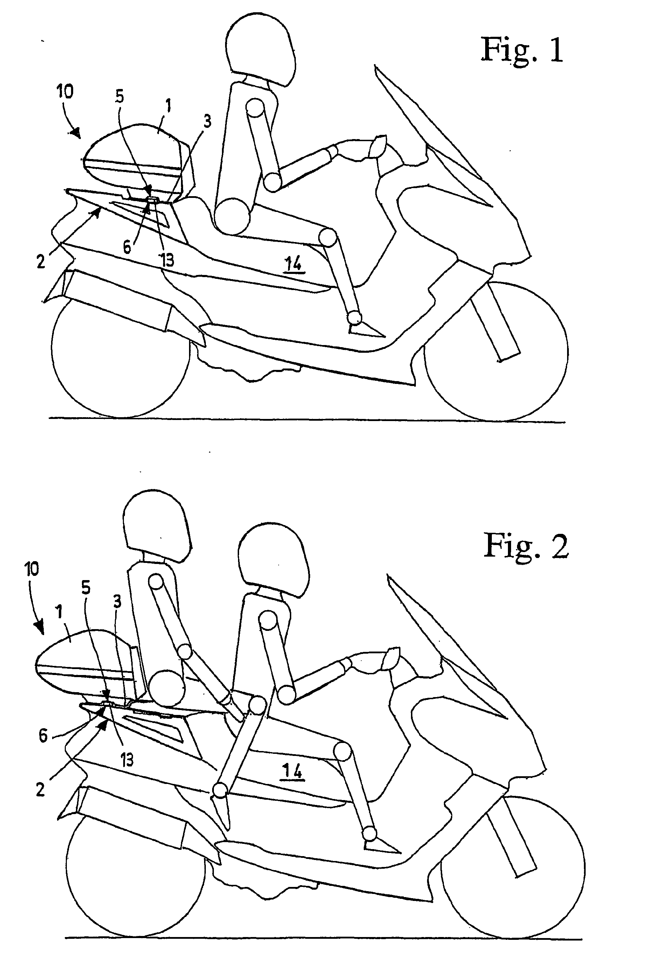

Advantageously, the moving means 5, allow the compartment 10 to be moved from a rear position, shown in figure 2, to a forward position, shown in figure 1.

In a forward position, the top box compartment 10 is situated on the saddle 14 directly behind the driving position, offering the latter a back-rest, see figure 1.

In this position, the distance between the application point of the weight force of the top box 1 and the barycentre of the vehicle is reduced, at the same time increasing the aerodynamics and manageability of the vehicle.

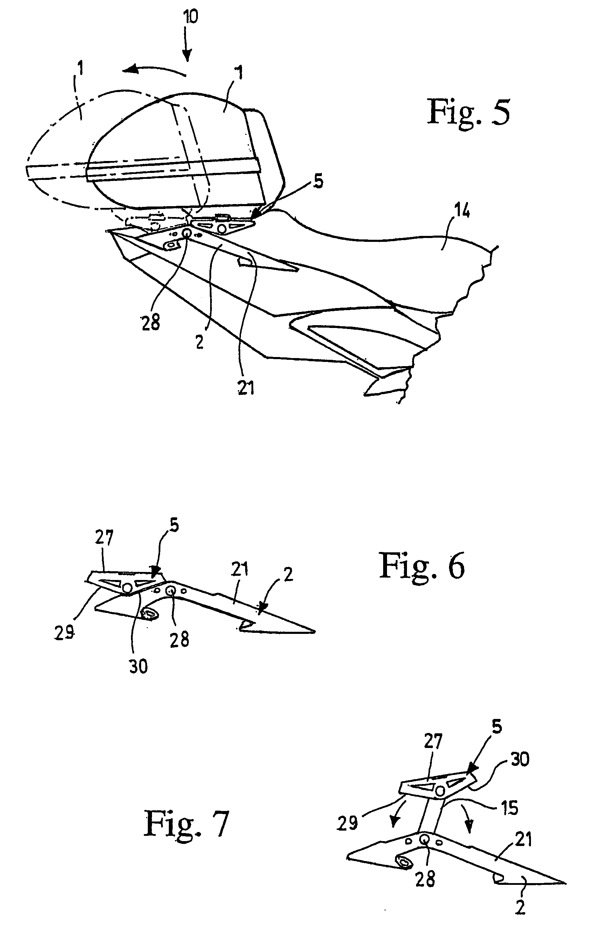

Vice versa, if necessary, it is possible to move the top box 1 to the rear position, to obtain space on the saddle 14 for a second passenger, see figure 2 or 5.

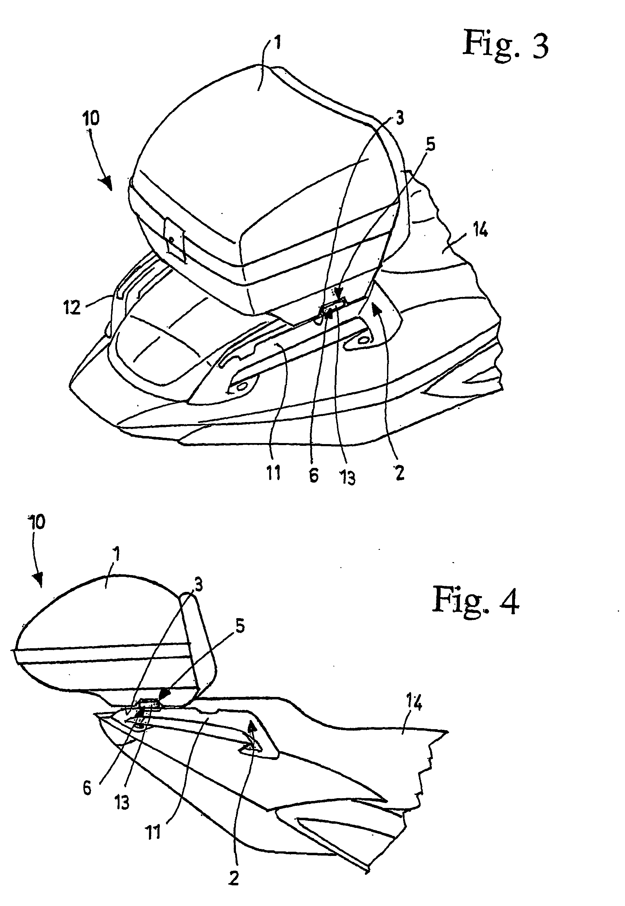

For this purpose, according to the embodiment shown in figures 1 to 4, the moving means 5 comprise at least one sliding block element 6, sliding along the guiding element 2 so as to move the top box 1, substantially along a horizontal line parallel to the advance direction of the vehicle, between a rear position, shown in figure 2, and a forward position, shown in figure 1, and vice versa.

More specifically, the guiding element 2 consists of two rails 11, 12 each fixed, to the bodywork of the vehicle, to the side of the saddle 14.

The rails 11, 12 are fixed to the bodywork of the vehicle by known means commonly used in the field and for this reason are not additionally described.

The sliding block element 6 consists of two skids 13 each engaged to slide along a guiding rail 11, 12.

The two skids 13, moreover, are fixed by fixing means 3 to the top box 10, in particular in correspondence with the bottom of the latter.

The fixing means 3 are in turn represented by a supporting plate, not directly visible in the figure, releasably constrained to the bottom of the top box compartment 1, but they could be represented by pins or bolts directly engaged with the bottom of the top box 1.

There are also stopping means, not shown, suitable for fixing the position of the top box 1 in a forward position, shown in figure 1, or in a rear position, shown in figure 2.

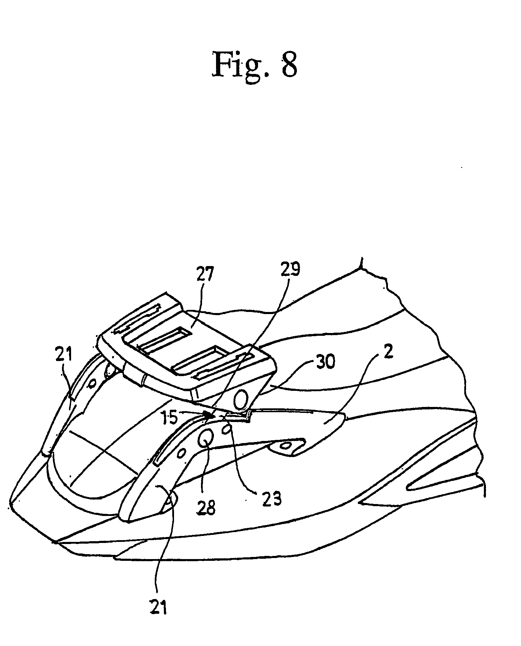

Figures 5 to 8 show the compartment device of the present invention in which the moving means 5 are represented by at least one connecting rod element 15 fulcrumed at the guiding element 2 and fixing means 3.

In this case, the guiding element 2 has two shaped brackets 21, each fixed to the bodywork of the vehicle, to the side of the saddle 14.

The shaped brackets 21 are fixed to the bodywork of the vehicle by known means commonly used in the field and for this reason not further described.

As better illustrated in figures 5 to 8, the shaped brackets 21 have a triangular form whose vertex offers the hinging point 28 of the connecting rod element 15.

More specifically, in the embodiment shown in figures 5 to 8, the connecting rod element 15 consists of two vertical bars 23, each hinged to a shaped bracket 21 and a structural stiffening transversal bar.

Each vertical bar 23 is therefore hinged at one end to the relative bracket 21 in correspondence with the vertex of the latter (hinging point 28), and at the other end to the fixing means 3.

The fixing means 3 comprise a supporting plate 27, which can be releasably constrained to the bottom of the top box 10.

The bars 23 rotate around the hinging point 28 to move the object-holder top box 1 from the rear position shown in figure 5, with a dashed line, to the forward position, shown in figure 5 with a full line.

Advantageously according to the present invention, the supporting plate 27 comprises at least two tilting portions 29, 30 suitable for defining two stop elements for the forward and rear position respectively of the top box 1.

The two tilting portions 29, 30 correspond to the tilting portions of the brackets 21.

It should be pointed out however that the object-holder compartment device according to the present invention can also be produced by providing, as movement means, a series of perforations suitable for being engaged with the fixing means 3.

In this case, the perforations are sequentially arranged on the guiding element 2 which in this case is represented by a plate constrained to the bodywork of the vehicle.

The fixing means can be represented by screw pins or bolts suitable for releasably constraining the compartment to the guiding element in correspondence with the perforation selected.

The characteristics of the object- and/or helmet-holder compartment of the "top box" type, object of the present invention, are evident from the above description, as also the relative advantages, among which the following can be mentioned:
- increase in the aerodynamic coefficient of the vehicle;
- reduced risks of contact with other vehicles or obstacles;
- increased manageability of the vehicle;
- constructive simplicity and functionality;
- relatively low production costs;
- possibility of regulating the position of the top box in relation to the necessity of the user.

In practice, the materials used, as also the dimensions, can vary according to technical demands.

## Claims

1. An object- and/or helmet-holder compartment device (10) of the top box type, comprising at least one top box (1), at least one guiding element (2) which can be fixed to the vehicle, at least one fixing element (3), fixed to the said top box (1) and moving means (5) constrained to the said guiding element (2) and said fixing means (3) for moving said top box (1) from a rear position to a forward position and vice versa, **characterized in that** said moving means (5) comprises at least one connecting rod element (15) fulcrumed at said guiding element (2) and said fixing means (3).

2. The object- and/or helmet-holder compartment (10) according to claim 1, **characterized in that** said guiding element (2) comprises two shaped brackets (21) each fixable to the bodywork of the vehicle, to the side of the saddle (14).

3. The object- and/or helmet-holder compartment (10) according to claim 2, **characterized in that** said connecting rod element (15) consists of two vertical bars (23), each hinged to a shaped bracket (21) and a transversal bar.

4. The object- and/or helmet-holder compartment device (10) according to claim 2, **characterized in that** said fixing means (3) comprises a supporting plate, which can be releasably constrained to the bottom of the top box (10) and hinged to said connecting rod element (15).

5. The object- and/or helmet-holder compartment device (10) according to claim 4, **characterized in that** said supporting plate comprises at least two tilting portions to define two stop elements for the forward and rear position of said compartment (10).

## Patentansprüche

1. Eine Objekt- und/oder Helmhalterfachvorrichtung (10) des Topcase Typs umfassend zumindest ein Topcase (1), zumindest ein Führungselement (2), welches an dem Fahrzeug festgelegt werden kann, zumindest ein Befestigungselement (3), welches an dem genannten Topcase (1) festgelegt ist, und Mittel zum Bewegen (5), welche mit dem genannten Führungselement (2) und dem genannten Befestigungselement (3) verbunden ist, um das genannte Topcase (1) aus einer hinteren Position in eine vordere Position und umgekehrt zu bewegen, **dadurch gekennzeichnet, dass** die genannten Mittel zum Bewegen (5) zumindest ein Verbindungsstangenelement (15) umfassen, welche am genannten Führungselement (2) und am genannten Befestigungsmittel (3) drehbar festgelegt ist.

2. Die Objekt- und/oder Helmhalterfachvorrichtung (10) nach Anspruch 1, **dadurch gekennzeichnet, dass** das genannte Führungselement (2) zwei geformte Klammern (21) umfasst, welche jeweils am Aufbau des Fahrzeugs neben dem Sattel (14) festlegbar sind.

3. Die Objekt- und/oder Helmhalterfachvorrichtung (10) nach Anspruch 2, **dadurch gekennzeichnet, dass** das genannte Verbindungsstangenelement (15) aus zwei vertikalen Stangen (23) besteht, welche jeweils schwenkbar an einer geformten Klammer (21) und einem Querbalken angebracht sind.

4. Die Objekt- und/oder Helmhalterfachvorrichtung (10) nach Anspruch 2, **dadurch gekennzeichnet, dass** das genannte Mittel zum Festlegen (3) eine Stützplatte umfasst, welche abnehmbar am Boden des Topcase (1) festgelegt werden kann und schwenkbar mit dem genannten Verbindungsstangenelement (15) verbunden werden kann.

5. Die Objekt- und/oder Helmhalterfachvorrichtung (10) nach Anspruch 4, **dadurch gekennzeichnet, dass** die genannte Stützplatte zumindest zwei Kippbereiche aufweist, um zwei Stoppelemente für die vordere und die hintere Position des genannten Fachs (10) zu definieren.

## Revendications

1. Dispositif de boîte à gants et / ou boîte à casques (10) du type coffret de dessus comprenant au moins un coffret de dessus (1), au moins un élément de guidage (2) qui peut être fixé au véhicule, au moins un élément de fixation (3) fixé audit coffret de dessus (1), et un moyen de déplacement (5) lié audit élément de guidage (2) et auxdits moyens de fixation (3) pour déplacer ledit coffret de dessus (1) d'une position arrière vers une position avant et vice-versa, **caractérisé en ce que** ledit moyen de déplacement (5) comprend au moins un élément de bielle (15) articulé audit élément de guidage (2) et auxdits moyens de fixation (3).

2. Dispositif de boîte à gants et / ou boîte à casques (10) selon la revendication 1, **caractérisé en ce que** ledit élément de guidage (2) comprend deux supports profilés (21) dont chacun peut être fixé au châssis du véhicule sur le côté de la selle (14).

3. Dispositif de boîte à gants et / ou boîte à casques (10) selon la revendication 2, **caractérisé en ce que** ledit élément de bielle (15) consiste en deux barres verticales (23) dont chacune est articulée à un support profilé (21) et en une barre transversale.

4. Dispositif de boîte à gants et / ou boîte à casques (10) selon la revendication 2, **caractérisé en ce que** ledit moyen de fixation (3) comprend une plaque de support qui peut être liée de manière amovible au fond du coffret de dessus (1) et articulée audit élément de bielle (15).

5. Dispositif de boîte à gants et / ou boîte à casques (10) selon la revendication 4, **caractérisé en ce que** ladite plaque de support comprend au moins deux parties inclinées pour définir deux éléments d'arrêt pour les positions avant et arrière de ladite boîte (10).
